# EUROPEAN PATENT APPLICATION

(11) **EP 0 581 367 A1**
(43) Date of publication of application: **02.02.1994**
(21) Application number: 93202097.7
(22) Date of filing: 17.07.1993
(51) Int. Cl.: C08K 13/04, C08J 9/26, C25B 11/03

(54) **Substrates containing resin, fibers and anti-agglomeration agent**

(30) Priority: 22.07.1992 US 918530
(71) Applicant: INTERNATIONAL FUEL CELLS CORPORATION, South Windsor, CT 06074 (US); CLC S.r.l., I-16128 Genova (IT)
(72) Inventor: Roethlein, Richard J., Stafford Springs Connecticut06076 (US); Stewart, Robert C., West Sheffield, Connecticut 06093 (US)
(74) Representative: Perani, Aurelio

(57) **Abstract**

Substrates containing anti-agglomerating agents possess better flowability during preparation, improved structural integrity, and uniform porosity. Mixing the anti-agglomerating agent with the fibers and resin during preparation and sifting the mixture inhibits fiber bundling and resin agglomeration. The anti-agglomerating agent surrounds the fibers preventing a static charge from building thereon. As a result, the inter-fiber attraction decreases, thereby inhibiting fiber bundling and resin agglomeration.

## Description

### Technical Field

The present invention relates to producing substrates, and especially relates to reducing fiber bundling and resin agglomeration in substrates.

### Background Art

Fuel cell stacks utilized in the production of electricity are comprised of numerous individual fuel cells each having an anode electrode, an anode side electrolyte reservoir plate, a cathode electrode, a cathode side electrolyte reservoir plate, an electrolyte, and a separator plate. Typically, conventionally formed, fiber reinforced substrates are employed to support anode and cathode catalysts, thereby forming the anode and cathode electrodes. These substrates are similarly employed to support electrolyte to form the electrolyte reservoir plate.

One conventional technique for forming the fiber reinforced substrate comprises mixing fibers and resin until homogeneous in a plow type mixer, forming the mixture into a thin layer, 0.250 inches to 0.75 inches and then compressing the layer while it's being heated to consolidate the mixture and cure the resin. However, during mixing, the fibers tended to bundle together, thereby reducing the flowability of the mixture. Reduction of the mixture flowability causes difficulty in forming uniform layers to be compressed and produces substrates with poor structural integrity, non-uniform porosity, and non-uniform fuel and oxidant diffusion rates. Therefore, utilization of these substrates as supports for anode catalysts, cathode catalysts, and electrolyte in a fuel cell stack results the in failure of individual fuel cells and failure of the fuel cell stack to obtain optimum efficiency.

Addressing the fiber bundling and resin agglomeration problems plaguing many conventional techniques comprised the investigation of a variety of mechanical processes. Two such mechanical processes utilized rotating brushes and screens, respectively. The rotating brushes failed to tear apart the fiber bundles while the screens appeared to successfully separated the fibers as they passed through the screen, the fibers tended to re-bundle once through the screen.

What is needed in the art is a method for producing improved fiber reinforced substrates which have improved structural integrity, improved flowability during production, uniform porosity and uniform fuel, oxidant, and/or electrolyte diffusion rates.

### Disclosure of the Invention

The present invention relates to a fiber reinforced substrate and a method for producing the same. The substrate of the present invention is comprised of fibers, resin, and an anti-agglomerating agent which inhibits fiber bundling during substrate preparation. Production of this substrate comprises mixing the fibers and resin with an anti-agglomerating agent to form a mixture. The mixture is formed into a layer and heat treated to cure the resin.

The foregoing and other features and advantages of the present invention will become more apparent from the following description.

### Best Mode for Carrying Out the Invention

The present invention relates to a fiber reinforced substrate, such as an electrode substrate or electrolyte reservoir plate, among others, and to its preparation. The substrate of the present invention is composed of resin, fibers which add structural integrity to the resin, and an anti-agglomerating agent which prevents fiber bundling and resin agglomeration thereby providing flowability during processing, improved structural integrity, and uniform fuel/oxidant diffusion rates.

A static charge which builds around the fibers causes fiber bundling by drawing the fibers together. The anti-agglomerating agent seems to form a barrier around the fibers thereby preventing the building of a static charge around the fibers, inhibiting fiber bundling, and thereby more evenly distributing the fibers. The inhibition of the fiber bundling by the anti-agglomerating agent also reduces resin agglomeration since the fibers are more evenly distributed throughout the substrate.

The preferred amount of anti-agglomerating agent corresponds to an amount sufficient to reduce the static charge around the fibers to a level sufficient to prevent fiber bundling. Generally, up to about 8 weight percent (wt%) anti-agglomerating agent is utilized based upon the final weight of the substrate, with about 0.05 wt% to about 5 wt% preferred, and about 0.1 wt% to about 0.6 wt% especially preferred. Although larger amounts of anti-agglomerating agent can be utilized, the structural integrity of the substrate decreases as the amount of anti-agglomerating agent exceeds about 8 wt%.

This anti-agglomerating agent also preferably possesses a small particle size to help insure uniform dispersion between the fibers within the resin. The average particle size can be up to about 1,000 Angstroms (Å), with about 200 Å to about 400 Å preferred, and about 275 Å to about 325 Å especially preferred. One such anti-agglomerating agent is Vulcan® XC-72, a carbon black produced by Cabot Corporation, Billerica, Massachusetts, which has an average particle size of about 300 Å.

Possible anti-agglomerating agents include carbon based compounds, such as amorphous carbon and carbon black, and silica based compounds, such as fumed silicon dioxide. Due to its compatibility with the acid fuel cell environment, carbon black is the preferred anti-agglomerating agent.

It is believed that this anti-agglomerating agent can inhibit fiber bundling of any conventional fibers compatible therewith. Some fibers which are useful for fuel cell component applications include carbon base fibers, with carbon and graphite fibers preferred, among others, such as Kureha®, a carbon fiber produced by khera Corporation of America, New York, New York. It should be noted that carbon and graphite fibers produced from precursor material such as cellulose (cotton) rayon, polyacryonitrile (PAN), mesophase pitch precursors, and the like can be utilized.

Fiber diameter and length are optimized to create a pore structure (pore diameter, tortuosity, areas open to free gas and liquid flow versus enclosed areas which can fill with liquid but not directly, etc.) which will allow electrolyte transfer, by-product removal, and reactant gas transfer, at rates commensurate with optimum performance. Optimum fiber diameters are conventional and readily determinable by an artisan. Typically, for acid fuel cell substrates, the fiber diameters range up to about 50 microns, with about 5 microns to about 20 microns preferred while the fiber lengths range from about 2 millimeters (mm) to about 25 mm, with about 4 mm to about 15 mm preferred.

Resin interspersed between the fibers forms the matrix and acts as a means of bonding the fibers and therefore the substrate together. Conventional resins possessing high ash or residual carbon content when pyrolyzed can be utilized. Upon heating, the ash or residual carbon becomes a glassy carbon film that bonds the fibers together. Low residual carbon (below about 40 wt% of the resin) results in decreased conductivity and flexure strength. Therefore, an ash or residual carbon content of about 45 wt% or greater of the resin is preferred. Some high residual carbon resins include thermosetting polymers, especially phenolic type thermosetting polymers such as single stage and two stage phenolic based resins, phenol-formaldehyde, and furfuryl alcohol, among others. Some commercially available resins include Varcum® 210, Reichold®, and BTL® produced by Oxychem Corporation of Niagara Falls, New York, among others.

The substrate porosity typically ranges from about 40% to about 90%. A fuel cell electrode substrate's porosity often ranges from about 60% to about 90%, with about 65% to 75% preferred, and about 68% to about 73% especially preferred, while a fuel cell electrolyte reservoir plate's porosity typically ranges from about 40% to about 60%, with about 45% to about 55% preferred, and about 47% to about 52% especially preferred.

Attaining these porosities comprises utilizing a pore forming material during the substrate preparation. This pore forming material typically does not chemically interact with the fibers, resin, or anti-agglomerating agent, has a burn out temperature greater than the curing temperature of the resin, and can readily be removed from the substrate. For example, flour, such as Gold Medal, Pillsbury, or King Arthur Flour, can act as a pore forming material. The flour is combined with the fibers, resin, and anti-agglomerating agent during preparation of the substrate. Then, prior to use as a substrate for the electrolyte catalyst, the flour is burned-out. Burning-out the flour consists of heating the substrate which has been formed into the desired shape, typically a sheet, to a temperature above about 1500°F (816°C). This temperature causes the flour to degrade, gasify, and disperse, thereby leaving pores in the substrate.

The preferred quantity of pore forming material constitutes a balance between the desired porosity of the substrate and its structural integrity. As the amount of pore forming material increases, the porosity of the finished substrate increases and the structural integrity thereof decreases. As a result, about 5 wt% to about 25 wt% pore forming material versus the weight of the mixture of fibers, resin, anti-agglomerating agent, pore forming material, density increasing substance and mold release compound (the latter two discussed below) prior to cure, can be utilized. About 10 wt% to about 13 wt% constitutes the preferred range since it results in the desired substrate porosity as described above.

Since the electrolyte reservoir plate is typically a denser structure than the electrode substrate, a density increasing substance can be added to the mixture of fibers, resin, and anti-agglomerating agent. One density increasing substance which has proven useful is graphite powder, such as Airco-60® produced by Carbon Graphite Group, St. Mary's, Pennsylvania. Generally, in the production of the electrolyte reservoir plate, about 40 wt% to about 80 wt% of the final mixture including the fibers, resin, anti-agglomerating agent, density increasing substance, pore forming material, and mold release compound is attributed to the density increasing substance.

Once the fibers, resin, anti-agglomerating agent, pore forming material, and any density increasing substance have been mixed, they are typically formed into a layer which is compressed either in a mold or between steel belts on a double belt press. To prevent the substrate from adhering to the mold or belts after compression and heating, an internal mold release compound is generally employed. This mold release compound migrates to the molding surface and prevents the mixture from sticking to the mold or belts. Conventional mold release compounds include stearic acid based compounds, beeswax, silicone, Teflon®, and others commonly known in the art. One such mold release is a wax ester known as Kanstick "Q"® Powder produced by Specialty Products Company, Jersey City, New Jersey.

Generally, the mold release compound is combined with the fibers, resin, anti-agglomerating agent, pore forming material, and any density increasing substance in a conventional manner. Basically, the fibers, resin, anti-agglomerating agent, pore forming material, density increasing substance, and mold release compound are mixed until essentially homogenous, sifted through a screen, and formed into the desired shape. Typically, the desired substrate shape is a thin layer (about 0.25 inches to about 0.75 inches thick, with about 0.45 inches to about 0.55 inches preferred). The mixture is then compressed and heated to about 300°F (149°C) to about 350°F (177°C) for up to about 20 minutes to melt and cure the resin. The resulting substrate is then heated about 1200°F (649°C) to about 1600°F (871°C) for about 72 hours to carbonize all organic material and burn out the pore forming material. Subsequent heat treatment to about 4352°F (2400°C) to about 5792°F (3200°C) for about 6 hours to about 12 hours is utilized to modify the carbon to graphite, thereby improving corrosion resistance, thermal conductivity, and electrical conductivity since the graphite essentially does not corrode in an acid fuel cell environment. Once graphitized, the substrate is cut to the desired size for processing into a fuel cell component. Generally, the substrate's dimensions are about 40 inches (15.7 centimeters (cm)) to about 50 inches (19.7 cm) in length, about 40 inches (15.7 cm) to about 50 inches (19.7 cm) in width, and has a thickness of about 0.010 inches (0.004 cm) to about 0.2 inches (0.08 cm).

Prior to forming the mixture into a layer, it has been found particularly useful to sift the mixture through a vibratory screen which sifts the mixture without imparting a rolling motion, thereby separating any fibers which are bundled and allowing the anti-agglomerating agent to surround the fibers without rolling the fibers together. Screen sizes which have proven useful in the production of substrates for use in fuel cells range from about 5 mesh to about 20 mesh. The Rotary Sifter produced by Blaw-Knox Food & Chemical Equipment Company, Buffalo, New York represents one such conventional vibratory screen.

The present invention will be clarified by reference to the following illustrative example. The example is given to illustrate a method for preparing the substrate of the present invention. It is not, however, intended to limit the generally broad scope of the present invention.

### Example

The following example was used to prepare an electrolyte reservoir plate comprised of 8.6 wt% Kureha carbon fibers, 29.3 wt% (BLT) phenolic resin, 0.4 wt% Vulcan®, 58.6 wt% graphite powder (Airco-60®), and 0.2 wt% K-Stick® mold release compound.
1. In a controlled environment, (0.0093 lbs water/lb dry air; 65°F - 75°F (18°C - 24°C)), 44 lbs. (pounds) (20 kg (kilograms)) of Kureha fibers, 150 lbs. (68 kg) phenolic resin, 300 lbs. (136 kg) graphite powder, 15 lbs. (6.8 kg) Gold Medal flour, 2 lbs. (0.9 kg) Vulcan® powder, and 1 lb. (0.45 kg) K-Stick® were mixed in a Littleford Model FKM-600-D at slow speed (about 35 rpm) for about 3 minutes to form an essentially homogenous mixture.
2. The mixture was then poured through a 10 mesh vibrator screen onto a belt such that the poured mixture had a thickness of about 0.5 inches (0.2 cm).
3. The layer was then heated to 325°F (163°C) in a continuous double band press for 16 minutes to form a cured 0.2 inch (0.08 cm) thick electrolyte reservoir plate.
4. The cured electrolyte reservoir plate was cut to a 44 inch (17.3 cm) by 44 inch (17.3 cm) by 0.2 inch (0.08 cm) plate.
5. Finally, the electrolyte reservoir plate was carbonized at 1500°F (816°C) and graphitized at about 5432°F (3000°C) for about 10 hours.

Advantages of the substrate of the present invention are readily apparent. This substrate is easier to prepare since there are essentially no bundles of fibers which inhibit flowability of the mixture during the substrate preparation. Additionally, inhibiting fiber bundling decreases resin agglomeration and improves the structural integrity of the substrate. Inhibition of fiber bundling also allows for uniform porosity and better flowability of the mixture during processing, thereby improving reactant gas transfer and subsequent electrode performance. Furthermore, the process is more efficient and the amount of scrapped parts due to non-uniform shrinking (during the cure cycle) and cracking caused by the resin agglomeration is reduced.

Although this invention has been shown and described with respect to detailed embodiments thereof, it will be understood by those in the art that various changes in form and detail thereof may be made without departing from the spirit and scope of the claimed invention.

## Claims

1. A fiber reinforced substrate, comprising:
a. a plurality of fibers;
b. a resin; and
c. an anti-agglomerating agent;
whereby said anti-agglomerating agent inhibits fiber bundling during preparation of said substrate.

2. A fiber reinforced substrate as in Claim 1, wherein said anti-agglomerating agent is a carbon based compound, a silica based compound, or a mixture thereof.

3. A fiber reinforced substrate as in Claim 1, wherein said anti-agglomerating agent is carbon black, fumed silicon dioxide, amorphous carbon, or mixtures thereof.

4. A fiber reinforced substrate as in Claim 1, wherein said substrate comprises about 0.05 wt% to about 5.0 wt% anti-agglomerating agent.

5. A fiber reinforced substrate as in Claim 1 having about 0.2 wt% to about 0.6 wt% anti-agglomerating agent.

6. A fiber reinforced substrate as in Claim 1, wherein said resin is a thermosetting polymer.

7. A fiber reinforced substrate as in Claim 1, wherein said resin is phenol-formaldehyde or furfuryl alcohol.

8. A fiber reinforced substrate as in Claim 1, wherein said fibers are carbon based fibers.

9. A fiber reinforced substrate as in Claim 1, wherein said substrate is an electrolyte reservoir plate further comprising a density increasing substance.

10. A fiber reinforced substrate as in Claim 9, wherein said density increasing substance is about 40 wt% to about 80 wt% graphite powder.

11. A fiber reinforced substrate as in Claim 1, wherein said substrate is an anode electrode or a cathode electrode.

12. A method for producing fiber reinforced substrates, comprising the steps of:
a. mixing fibers and resin with an anti-agglomerating agent to form a mixture;
b. forming said mixture into a layer; and
c. heating said layer to cure said resin.

13. A method for producing fiber reinforced substrates as in Claim 12, wherein said anti-agglomerating agent is a carbon based compound, a silica based compound, or a mixture thereof.

14. A method for producing fiber reinforced substrates as in Claim 12, wherein said anti-agglomerating agent is carbon black, fumed silicon dioxide, amorphous carbon, or mixtures thereof.

15. A method for producing fiber reinforced substrates as in Claim 12, wherein said resin is a thermosetting polymer.

16. A method for producing fiber reinforced substrates as in Claim 12, wherein said resin is phenol-formaldehyde or furfuryl alcohol.

17. A method for producing fiber reinforced substrates as in Claim 12, wherein said fibers are carbon based fibers.

18. A method for producing fiber reinforced substrates as in Claim 12, wherein about 0.05 wt% to about 5.0 wt% anti-agglomerating agent is mixed with said fibers and said resin.

19. A method for producing fiber reinforced substrates as in Claim 12, wherein about 0.2 wt% to about 0.6 wt% anti-agglomerating agent is mixed with said fibers and said resin.

20. A method for producing fiber reinforced substrates as in Claim 12 further comprising the step of mixing a density increasing substance into said mixture.

21. A method for producing fiber reinforced substrates as in Claim 20 wherein said density increasing substance is about 40 wt% to about 80 wt% graphite powder.

22. A method for producing fiber reinforced substrates as in Claim 12 further comprising the step of compressing said layer while heating said layer.

23. A method for producing fiber reinforced substrates as in Claim 12 further comprising the steps of adding a pore forming material to said mixture; and burning said pore forming material out of said substrate.

24. A method for producing fiber reinforced substrates as in Claim 12 wherein said pore forming material is flour.

25. A method for producing fiber reinforced substrates as in Claim 12 further comprising the step of sifting said mixture through a screen prior to forming it into a layer.

26. A fiber reinforced substrate for use in a fuel cell, comprising:
a. a plurality of carbon based fibers;
b. a thermosetting polymer resin; and
c. a carbon based compound which inhibits fiber bundling and resin agglomeration during preparation of said substrate.

27. A fiber reinforced substrate as in Claim 26 comprising about 0.50 wt% to about 5.0 wt% carbon based compound.

28. A fiber reinforced substrate as in Claim 26 further comprising a density increasing substance.
